# DEMANDE DE BREVET EUROPEEN

(11) **EP 1 645 774 A1**
(43) Date de publication de la demande: **12.04.2006**
(21) Numéro de dépôt: 05292105.3
(22) Date de dépôt: 10.10.2005
(51) Int. Cl.: F16F 13/14

(54) **Dispositif antivibratoire et véhicule comportant un tel dispositif**

(30) Priorité: 11.10.2004 FR 0410704
(71) Demandeur: HUTCHINSON, 75008 Paris (FR)
(72) Inventeur: Bouhier, Bernard, 41140 Noyers sur Cher (FR); Carbolante, Pascal, 18100 Saint Hilaire de Court (FR)
(74) Mandataire: Burbaud, Eric

(57) **Abrégé**

Dispositif antivibratoire comportant une armature interne (12), une armature externe (14), un corps en élastomère (16) reliant les armatures interne (12) et externe (14), le corps en élastomère (16) délimitant au moins une première chambre (22) remplie de liquide, caractérisé en ce que la première chambre (22) est étanche et disposée entre l'armature interne (12) et l'armature externe (14).

## Description

La présente invention se rapporte aux dispositifs antivibratoires.

Plus particulièrement, l'invention concerne un dispositif antivibratoire comportant une armature interne s'étendant selon un axe longitudinal, une armature externe annulaire entourant l'armature interne, une première armature intermédiaire disposée entre l'armature externe et l'armature interne, un corps en élastomère reliant les armatures interne et externe, le corps en élastomère délimitant au moins une première chambre remplie de liquide.

Le document FR 2 655 112 décrit un exemple d'un tel dispositif qui comporte deux chambres et dans lequel un passage étranglé permet de faire communiquer les deux chambres entre elles afin d'obtenir un amortissement hydraulique grâce au passage du fluide d'une chambre vers l'autre chambre.

Cependant avec ce type de dispositif il est très difficile d'obtenir des rapports de raideur élevés entre les différents axes, tout en conservant des possibilités de déplacement des armatures selon un axe.

La présente invention a notamment pour but de pallier ces inconvénients.

A cet effet, selon l'invention, un dispositif antivibratoire du genre en question est caractérisé en ce la première chambre est étanche et disposée entre l'armature interne et l'armature externe de façon
- à subir un effort de compression sensiblement sans variation de volume lorsque les armatures interne et externe se déplacent l'une par rapport à l'autre selon une première direction choisie parmi une direction axiale parallèle à l'axe longitudinal, et une direction radiale perpendiculaire audit axe longitudinal,
- et offrir une moindre résistance lorsque les armatures interne et externe se déplacent selon une deuxième direction choisie parmi les directions radiale et axiale et distincte de la première direction.

Grâce à ces dispositions, le dispositif antivibratoire présente un rapport de raideur élevé entre deux directions.

Dans divers modes de réalisation du dispositif selon l'invention, on peut éventuellement avoir recours en outre à l'une et/ou à l'autre des dispositions suivantes :
- la première chambre est disposée pour se déformer sensiblement sans augmentation de pression du liquide lorsque les armatures interne et externe se déplacent l'une par rapport à l'autre dans la deuxième direction ;
- la première armature intermédiaire est disposée adjacente à l'armature externe ;
- la première chambre est disposée radialement entre les armatures interne et externe ;
- le dispositif comporte deux premières chambres remplies de liquide et indépendantes, c'est à dire qu'elles sont étanches et ne communiquent pas entre elles ;
- les deux premières chambres sont diamétralement opposées et disposées radialement entre l'armature interne et l'armature externe ;
- le dispositif comporte en outre deux secondes chambres remplies de liquide et indépendantes, diamétralement opposées, disposées entre l'armature interne et l'armature externe, et alignées perpendiculairement aux deux premières chambres ;
- le dispositif comporte au moins une deuxième portion d'armature intermédiaire entourant l'armature interne et noyée dans le corps en élastomère ;
- le dispositif comporte en outre deux chambres supplémentaires remplies de liquide disposées axialement de part et d'autre de ladite première chambre, et reliées entre elles par au moins un conduit ;
- l'armature interne et l'armature externe présentent des parties qui s'étendent selon une direction radiale vers l'extérieur, et en ce que la première chambre est disposée axialement entre ces parties ;
- le corps en élastomère comporte en outre un évidement qui s'étend longitudinalement entre l'armature externe et l'armature interne.

D'autres caractéristiques et avantages de la présente invention seront expliqués à la lecture de ce qui suit, en relation avec les dessins annexés pour lesquels:
- la figure 1 représente une vue en coupe longitudinale d'un dispositif antivibratoire selon un premier mode de réalisation;
- la figure 2 représente une vue en coupe transversale du dispositif représenté à la figure 1 ;
- la figure 3 est une vue en coupe transversale d'un dispositif antivibratoire selon une variante de réalisation ;
- la figure 4 est une vue en perspective avec une coupe selon deux plans perpendiculaires du dispositif de la figure 1, selon une autre variante de réalisation.
- la figure 5 représente une vue en coupe longitudinale d'un dispositif selon un second mode de réalisation ;

Les dispositifs anti-vibratoires du type décrit précédemment sont utilisés dans différents types d'applications, notamment pour l'amortissement de vibrations entre deux éléments d'un véhicule, comme par exemple, la caisse et les suspensions. Pour cela, ils comprennent une armature interne qui peut être reliée à un élément de la suspension, et une armature externe qui peut être reliée à un élément de la caisse. L'amortissement des vibrations est alors réalisé par un corps en élastomère intercalé entre l'armature interne et l'armature externe. Le dispositif permet d'amortir les vibrations émanant des roues du véhicule, vers la caisse, et ainsi d'offrir un meilleur confort pour l'usager.

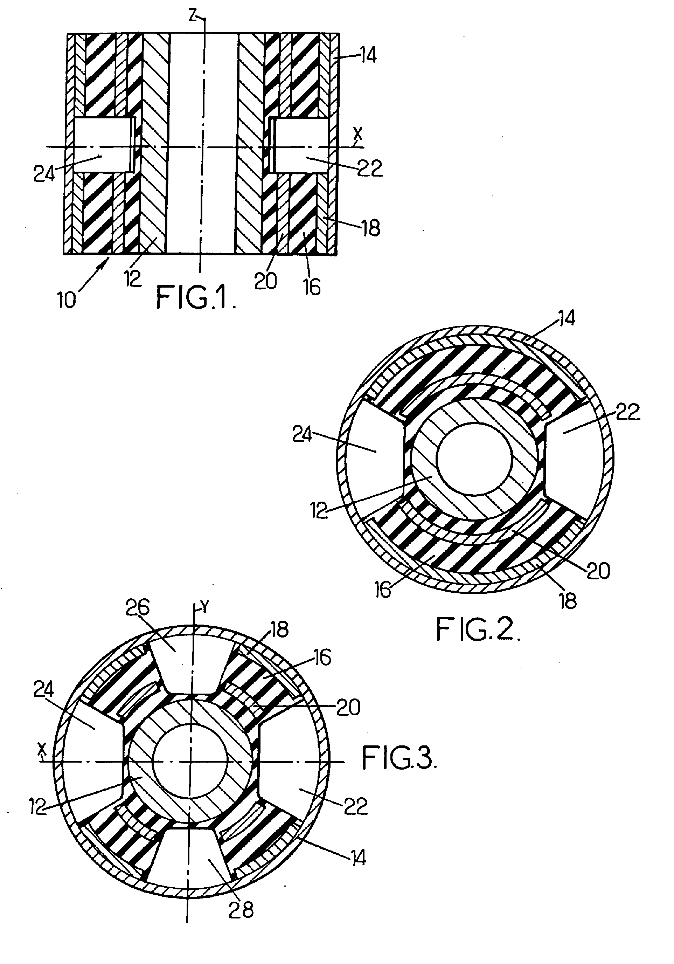

Tel que représenté à la figure 1, un exemple schématique de dispositif anti-vibratoire 10 conforme à l'invention comprend deux armatures : une armature interne 12 et une armature externe 14 cylindrique. Les armatures externe 14 et interne 12 sont co-axiales selon un axe longitudinal Z.

Le dispositif comporte en outre un corps en élastomère 16 disposé entre les deux armatures externe 14 et interne 12. Le dispositif comporte aussi une première armature intermédiaire 18, ou armature à fenêtre, enrobée dans le corps en élastomère 16, et disposée adjacente à l'armature externe 14. La première armature intermédiaire 18 permet d'assurer, en coopération avec l'armature externe 14, l'étanchéité du dispositif.

Tel que représenté à la figure 1, le dispositif comprend une deuxième armature intermédiaire 20, intercalée entre l'armature interne 12 et la première armature intermédiaire 18, dans le corps en élastomère 16. Les armatures intermédiaires sont cylindriques et co-axiales à l'axe longitudinal Z. Les portions des armatures intermédiaires 18 et 20, visibles sur la figures 2, présentent la forme d'un arc de cercle centré sur l'axe longitudinal Z, et entourant l'armature interne 12.

Lors de la fabrication du dispositif, le corps en élastomère 16 est moulé et enrobe les armatures intermédiaires 18, 20. Il est adhérisé aux armatures intermédiaires 18, 20 et à l'armature interne selon des procédés connus de l'homme du métier. L'armature externe 14 est emmanchée et rétreinte sur l'élément moulé.

Le corps en élastomère 16 délimite en outre deux chambres 22, 24 remplies de liquide, tel que du glycol ou du silicone. Les chambres 22, 24 sont disposées radialement entre l'armature interne 12 et l'armature externe 14, et passent par un plan médian et perpendiculaire à l'axe longitudinal Z. Les chambres 22, 24 sont diamétralement opposées et présentent un axe de symétrie, qui est l'axe longitudinal Z.

Les armatures intermédiaires 18, 20 présentent chacune deux ouvertures, ou fenêtres, correspondant aux sections des chambres 22 et 24.

Sur la coupe transversale de la figure 2, les chambres 22, 24 présentent une section sensiblement trapézoïdale, et s'étendent radialement selon l'axe X dans le dispositif 10. Elles sont délimitées en partie par l'armature externe 14, et le corps en élastomère 16.

Les chambres 22, 24 sont étanches, c'est à dire qu'elles sont indépendantes et ne communiquent pas entre elles.

Ainsi lorsque le dispositif 10 est sollicité selon la direction radiale X, les chambres 22, 24 subissent un effort de compression sans variation de volume, car elles sont remplies de liquide. La raideur selon l'axe radial X du dispositif 10 est alors relativement élevée, car le corps en élastomère 16 se déforme peu en compression et les chambres 22, 24 remplies de liquide incompressible contribuent à augmenter la raideur selon cet axe.

La disposition symétrique des chambres 22, 24 par rapport à l'axe longitudinal Z permet d'obtenir des raideurs sensiblement identiques lorsque le dispositif est sollicité dans les deux sens selon la direction radiale X.

Lorsque le dispositif est sollicité selon la direction longitudinale Z, l'une des armatures externe 14 ou interne 12 est sollicitée selon ledit axe longitudinal Z, et le corps en élastomère 16 se déforme alors selon cette direction. Le corps en élastomère 16 présente des caractéristiques de déformation plus importantes en cisaillement qu'en compression, il pourra donc se déformer plus facilement selon la direction longitudinale Z. Les chambres 22, 24 offrent une moindre résistance selon la direction longitudinale Z. Les chambres sont disposées pour se déformer sensiblement sans augmentation de pression du liquide lorsque les armatures interne 12 et externe 14 se déplacent l'une par rapport à l'autre dans la direction longitudinale Z. La pression augmente donc moins dans les chambres 22, 24, lors d'un déplacement d'une des armatures interne et externe selon l'axe longitudinal Z.

Le rapport entre la raideur selon l'axe radial X et selon l'axe longitudinal Z est alors particulièrement élevé, et cela sans modifier la dureté du mélange constituant le corps en élastomère 16 ou bien sans modifier les dimensions de l'épaisseur du corps en élastomère 16. En effet, dans les dispositifs de l'art antérieur, on obtient des rapports de raideur équivalents à ceux du dispositif selon l'invention, avec des épaisseurs du corps en élastomère 16 qui ne permettent pas des déplacements importants entre l'armature externe et l'armature interne selon l'axe longitudinal ou radial. Notamment si l'épaisseur du corps en élastomère 16 est diminuée selon l'axe radial, la raideur radiale augmente. La raideur axiale augmente aussi, mais moins rapidement que la raideur radiale. Le rapport de la raideur radiale sur la raideur axiale est donc augmenté, mais le dispositif obtenu ne permet pas une déformation important du corps en élastomère 16 selon l'axe longitudinal Z, et donc ne permet pas de déplacements importants entre l'armature interne 12 et l'armature externe 14.

Selon une variante de l'invention, représentée à la figure 3, le dispositif 10 selon l'invention peut comporter deux secondes chambres 26, 28, disposées radialement entre l'armature interne et l'armature externe 14, selon une direction Y perpendiculaire à l'axe X. Cette disposition permet de rendre symétrique les raideurs selon les deux directions radiales X, Y.

Dans ce cas, le rapport de raideur entre l'une ou l'autre des deux raideurs radiales et la raideur longitudinale est encore plus important, car le corps en élastomère 16 présente des caractéristiques de déformation en cisaillement plus élevées, du fait qu'une partie de corps en élastomère 16 est remplacé par les deux premières ou seconde chambres.

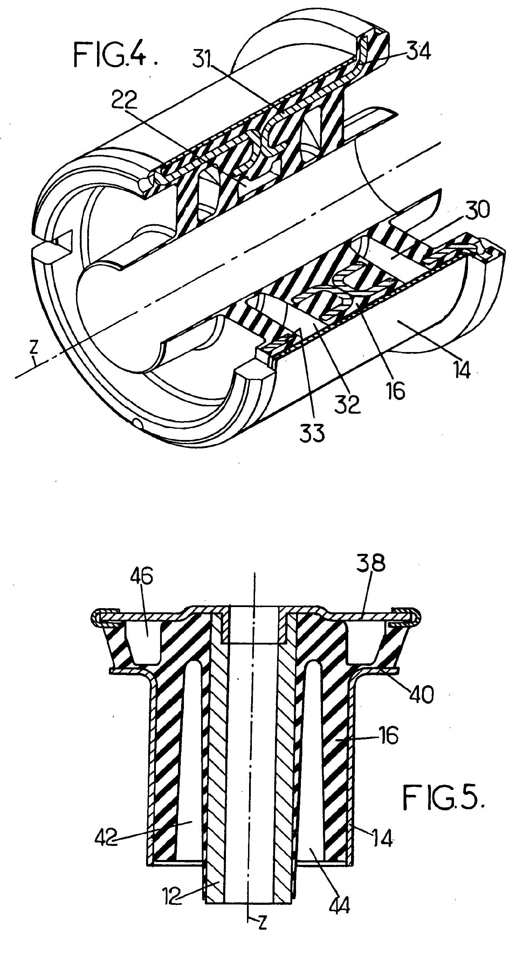

Une variante de réalisation du dispositif selon le premier mode de réalisation est représentée à la figure 4. Sur cette figure les éléments identiques à ceux des figures antérieures possèdent les mêmes références que celles des figures précédentes.

Le dispositif, illustré à la figure 4, comporte deux chambres radiales, dont une seule 22 est représentée. Les chambres radiales 22 sont non communicantes et sont disposées dans un même plan médian perpendiculaire à l'axe longitudinal Z, tel que décrit ci-dessus. Le dispositif comporte en outre deux chambres supplémentaires 30, 32 axiales disposées axialement de part et d'autre des chambres radiales 22. Sur la figure 4, les chambres axiales 30, 32 sont disposées vers les extrémités longitudinales du dispositif 10. Les chambres axiales 30, 32 s'étendent dans deux plans distaux parallèles au plan médian perpendiculaire à l'axe longitudinal Z, et présentent une forme sensiblement circulaire.

Chaque chambre 30, 32 axiale débouche sur la surface du corps en élastomère 16 par deux ouvertures partiellement circulaires, c'est à dire ayant la forme d'un arc de cercle, et disposée de manière diamétralement opposée. Les chambres 30, 32 sont reliées par au moins un conduit (non visible sur la figure 4).

Le dispositif comporte en outre une armature intermédiaire 34 réalisée par assemblage de deux éléments métalliques présentant une forme semi-cylindrique et entourant l'armature interne 12. Ces éléments sont formés par emboutissage puis assemblés, par exemple, par soudage. Ils possède une longueur légèrement supérieure à celle de l'armature externe 14 et présentent une extrémité 34 recourbée. Ainsi, l'armature externe 14 est emmanchée, restreinte et bloquée sur l'armature à fenêtre 34, avec une couche d'élastomère 16 intercalée entre les deux. L'extrémité recourbée 34 limite le déplacement longitudinal de l'armature à fenêtre 18 sur l'armature externe 14, et permet d'obtenir l'étanchéité du dispositif

Chacun des éléments présentent deux fenêtres ou évidements 33, ces évidements délimitant les sections des chambres supplémentaires 30, 32 du jeu axial.

Le dispositif tel que décrit ci-dessus présente un rapport de la raideur radiale sur la raideur longitudinale élevé. En effet les chambres radiales remplies de liquide et non communicantes contribuent à augmenter la raideur radiale, tandis que les chambres supplémentaires axiales, qui débouchent sur le surface du corps en élastomère 16 contribuent à diminuer la raideur axiale du dispositif.

La couche du corps en élastomère 16 située entre les chambres radiales 22 et les chambres axiales 30, 32 positionnées aux niveaux des extrémités longitudinales, est déformable plus facilement, notamment par cisaillement, ou par flexion, car son épaisseur est moins importante. Le dispositif peut alors être utilisé pour des éléments du véhicule présentant essentiellement des sollicitations selon l'axe longitudinal Z.

Selon un autre mode de réalisation représenté à la figure 5, le dispositif antivibratoire comporte une armature interne 12 et une armature externe 14 annulaires et co-axiales, qui comportent chacune une partie 38, 40 s'étendant selon une direction radiale vers l'extérieur. Ces parties sont disposées en regard l'une de l'autre.

Un corps en élastomère 16 est disposé entre les deux armatures 12, 14 et adhérisé à l'armature interne 12. Le corps en élastomère 16 s'étend aussi entre les deux parties 38, 40 de l'armature interne 12 et de l'armature externe 14.

Le corps en élastomère 16 comporte deux évidements 42, 44 symétriques et une chambres 46 circulaire. Les évidements s'étendent sensiblement parallèlement à l'axe longitudinal Z entre l'armature externe 14 et l'armature interne 12, et s'étendent sensiblement orthoradialement. La chambre 46 s'étend axialement entre chaque partie radiale 38, 40 de l'armature interne 12 et de l'armature externe 14. La chambre 46 est remplie de liquide, et est totalement étanche.

Ainsi lorsque l'armature interne 12 ou externe 14 est sollicitée selon l'axe longitudinal Z, le corps en élastomère 16 disposé entre les parties 38, 40 des armatures externe 14 et interne 12 se déforme peu, car il est peu déformable en compression sans variation de volume de la chambre 46. La raideur selon la direction longitudinale Z est alors élevée.

Le corps en élastomère 16 situé entre les chambres 42, 44, 46 de premier et deuxième jeu se déforme par flexion lors d'une sollicitation selon la direction radiale. La partie du corps en élastomère qui travaille est celle située entre les chambres de jeux différents.

Ainsi le rapport de la raideur axiale sur la raideur radiale est très élevé, ce qui permet d'obtenir un dispositif disposé entre deux éléments se déplaçant essentiellement selon une direction transversale, perpendiculaire à l'axe longitudinale Z, pour absorber les vibrations selon cette direction.

Dans Le dispositif l'armature interne (12) et l'armature externe (14) présentent des parties (38, 40) qui s'étendent selon une direction radiale vers l'extérieur, et en ce que la première chambre (46) est disposée axialement entre ces parties (38, 40). Le corps en élastomère (16) comporte en outre au moins un évidement (42) qui s'étend longitudinalement entre l'armature externe (14) et l'armature interne (12).

Selon une variante de l'invention, les deux évidements 42, 44 peuvent être remplacés par une chambre circulaire afin d'obtenir une raideur moins importante selon la direction radiale.

## Revendications

1. Dispositif antivibratoire comportant une armature interne (12) s'étendant selon un axe longitudinal (Z), une armature externe (14) annulaire entourant l'armature interne (12), une première armature intermédiaire (18) disposée entre l'armature externe et l'armature interne, un corps en élastomère (16) reliant les armatures interne (12)et externe (14), le corps en élastomère (16) délimitant au moins une première chambre (22) remplie de liquide,
**caractérisé en ce que** la première chambre (22) est étanche et disposée entre l'armature interne (12) et l'armature externe (14) de façon
- à subir un effort de compression sensiblement sans variation de volume lorsque les armatures interne (12) et externe (14) se déplacent l'une par rapport à l'autre selon une direction radiale (X, Y) perpendiculaire audit axe longitudinal (Z),
- et offrir une moindre résistance lorsque les armatures interne (12) et externe (14) se déplacent selon une direction axiale et distincte de la première direction, et **en ce que** le dispositif comportant en outre deux chambres supplémentaires (30, 32) remplies de liquide disposées axialement de part et d'autre de ladite première chambre (22), et reliées entre elles par au moins un conduit.

2. Dispositif selon la revendication 1, dans lequel la première chambre (22) est disposée pour se déformer sensiblement sans augmentation de pression du liquide lorsque les armatures interne (12) et externe (14) se déplacent l'une par rapport à l'autre dans la deuxième direction.

3. Dispositif selon l'une des revendications 1 et 2, dans lequel la première armature intermédiaire (18) est disposée adjacente à l'armature externe (14).

4. Dispositif selon l'une des revendications précédentes, dans lequel la première chambre (22) est disposée radialement entre les armatures interne (12) et externe (14).

5. Dispositif selon l'une des revendications précédentes, comportant deux premières chambres (22,24) remplies de liquide et indépendantes.

6. Dispositif antivibratoire selon la revendication 5, dans lequel les deux premières chambres (22, 24) sont diamétralement opposées et disposées radialement entre l'armature interne (12) et l'armature externe (14).

7. Dispositif selon la revendication 5 ou 6, comportant en outre deux secondes chambres (26, 28) remplies de liquide et indépendantes, diamétralement opposées, disposées entre l'armature interne (12) et l'armature externe (14), et alignées perpendiculairement aux deux premières chambres (22, 24).

8. Dispositif selon l'une des revendications 1 à 7, comportant au moins une deuxième armature intermédiaire (20) entourant l'armature interne (12) et noyée dans le corps en élastomère (16).

9. Véhicule comprenant un dispositif selon l'une des revendications précédentes.
